# EUROPÄISCHE PATENTSCHRIFT

(11) **EP 0 773 869 B1**
(45) Veröffentlichungstag und Bekanntmachung des Hinweises auf die Patenterteilung: **25.02.1998**
(21) Anmeldenummer: 95927667.6
(22) Anmeldetag: 19.07.1995
(51) Int. Cl.: B32B 5/26, F41H 3/02, F41H 5/04

(54) **KLEIDUNG ZUM SCHUTZ GEGEN STICH- UND GESCHOSSVERLETZUNGEN**
CLOTHING FOR PROTECTION AGAINST STAB AND BULLET WOUNDS
VETEMENT DE PROTECTION CONTRE LES BLESSURES PAR BALLES OU PROVOQUEES PAR DES OBJETS POINTUS OU TRANCHANTS

(30) Priorität: 28.07.1994 DE 4426748
(43) Veröffentlichungstag der Anmeldung: 21.05.1997
(73) Patentinhaber: Akzo Nobel N.V., 6824 BM Arnhem (NL)
(72) Erfinder: SCHUSTER, Dieter, Hans, Peter, D-42111 Wuppertal (DE); FELS, Achim, Gustav, D-42109 Wuppertal (DE); SCHÜRMANN, Guido, D-42349 Wuppertal (DE)
(74) Vertreter: Fett, Günter
(86) Internationale Anmeldenummer: EP9502849
(87) Internationale Veröffentlichungsnummer: WO9603277

(56) Entgegenhaltungen:
- EP-A- 0 169 432
- DE-A- 2 927 653
- GB-A- 1 397 955
- GB-A- 2 221 976
- US-A- 4 357 387

## Beschreibung

Die Erfindung betrifft Schutzkleidung, besonders Kleidung zum Schutz gegen Verletzungen durch Stichgeräte, Schneidgeräte, Geschosse oder Splitter, aufgebaut aus mehreren Lagen von Flächengebilden.

Für Schutzkleidung gegen die Einwirkung von Stich- und Schneidgeräten ebenso wie gegen Geschosse oder Splitter sind bereits verschiedene Ausführungsformen beschrieben worden. Meistens ist diese Schutzkleidung aus mehreren Lagen aufgebaut, wobei die einzelnen Lagen häufig aus den gleichen Materialien bestehen. Aber auch die Verwendung unterschiedlicher Materialien in den einzelnen Lagen ist bekannt.

Sehr häufig finden, besonders für sogenannte antiballistische Schutzkleidung (Kleidung zum Schutz gegen Geschosse und Splitter) Gewebe aus Aramidfasern in den einzelnen Schutzlagen Anwendung. Ein Beispiel hierfür ist DE-A 3 426 458, wo ein Laminat aus solchen Geweben für geschoßhemmende Kleidung beschrieben wird.

Daneben wurden auch Gewebe und andere textile Flächengebilde aus hochfesten Polyethylenfasern für antiballistische Schutzkleidung vorgeschlagen.

Auch für den Schnittschutz wurde die Verwendung von Aramidfasern bereits beschrieben. So wird in EP-A 224 425 eine spezielle Maschenwarenkonstruktion aus Aramidfasern in Kombination mit einer Harzausrüstung für diesen Einsatz diskutiert.

In EP-A 519 359 werden Flächengebilde aus umsponnenen Garnen, die Aramidfasern als Kern und leicht färb- oder bedruckbare Natur- oder Chemiefasern im Mantel enthalten, für die Herstellung von Stich-, Schnitt-, Splitter- und Kugelschutzkleidung vorgeschlagen.

In GB-A 2 221 976 wird ein antiballistischer Helm, dessen Schale aus ein in eine Kunststoffmatrix eingebetteten Textilmaterial mit einer dicken Keramikschicht, die über Plasmasprühbeschichtung aufgebracht wurde, beschrieben.

GB-A 1 397 955 offenbart eine mit einer mittels Plasmasprühbeschichtung aufgebrachten Keramikschicht. Das beschichtete Material ist in eine Kunststoffmatrix eingebettet. Dieser Faser-Kunststoff-Verbund, der ebenfalls der Hartballistik zuzuordnen ist, weist eine antiballistische Wirkung auf.

Die Verbesserung von Kleidung, die dem Schutz von Menschen gegen Verletzungen dient, ist eine Daueraufgabe der mit der Entwicklung dieser Kleidung beschäftigten Stellen. Neben der Verbesserung der Schutzwirkung ist hierbei vor allem auch die Verbesserung des Tragekomforts ein anzustrebendes Ziel. Außerdem besteht auch eine Dauerforderung, Wege für eine einfachere und billigere Herstellung dieser Kleidung aufzuzeigen.

Eine besonders wichtige Forderung ist es, antiballistische Schutzkleidung, also Kleidung, die Schutz gegen Geschosse und Splitter bieten soll, so zu gestalten, daß diese auch Schutz gegen Sticheinwirkungen bietet. Diese Forderung wird besonders von Polizeikräften erhoben, die nicht nur Angriffen durch Schuß-, sondern auch durch Stichwaffen ausgesetzt sind.

Derartige Kleidung für den kombinierten Kugel- und Stichschutz ist bereits bekannt. So wird hierfür in EP-A 597 165 eine Platte, die aus übereinander angeordneten und in ein Matrixharz eingebetteten Geweben aus hochfesten Fasern gebildet wird, vorgeschlagen. Die Platte kommt, vorwiegend zum Schutz des Brust- und Rückenbereichs, in Schutzwesten in Kombination mit herkömmlichen antiballistischen Gewebelagen zum Einsatz.

Mit dieser Schutzkleidung wird, ebenso wie mit der hierfür schon vorgeschlagenen Verwendung von Metallplatten als Einschübe in Schutzwesten, nicht die nötige Bewegungsfreiheit des Trägers bei einem Einsatz gewährleistet. Neben dem relativ hohen Gewicht beeinträchtigt auch die mangelnde Flexibilität dieser Einlage in der Weste den Tragekomfort erheblich.

Somit bestand weiterhin die Aufgabe der Verbesserung dieser Schutzkleidung, vor allem im Hinblick auf den Tragekomfort.

Überraschend wurde gefunden, daß eine deutliche Verbesserung der Schutzwirkung ohne Beeinträchtigung des Tragekomforts erreicht werden kann, wenn einzelne Lagen der Schutzkleidung aus Flächengebilden, auf die mittels einer Plasmasprühbeschichtung eine Schicht eines keramischen Materiales aufgebracht worden ist, bestehen. Die als Trägermaterialien dieser Beschichtung geeigneten Flächengebilde bestehen bevorzugt aus Aramiden, besonders bevorzugt aus Geweben aus Aramidfasern.

Die Plasmasprühbeschichtung von Geweben, auch von Geweben aus Aramidfasern, ist für den Einsatz in der Elektrotechnik bekannt. Entsprechende Verfahren und Anwendungen beschreiben US-A 4 357 387, US-A 4 713 284 und DE-U 90 12 342.

In keiner der hier genannten Patentpublikationen findet man einen Hinweis, daß Flächengebilde mit einer mittels Plasmasprühbeschichtung aufgebrachten Keramikschicht sehr gute Stichschutzeigenschaften zeigen und somit besonders vorteilhaft für Schutzkleidung Verwendung finden können.

Daher war es überraschend, daß solche Materialien in besonders vorteilhafter Weise für Stichschutzkleidung und besonders auch für Kleidung, die einen kombinierten Stich- und Kugelschutz bietet, Verwendung finden können.

Als Trägermaterialien für die mittels Plasmasprühbeschichtung aufzubringende Keramikschicht ist eine hohe Zahl verschiedener Materialien einsetzbar. Diese müssen, um in Schutzkleidung Verwendung finden zu können, in Form von Flächengebilden vorliegen. Hierbei kann es sich um Folien, Filme, Gewebe, Maschenwaren, Vliesstoffe oder Fadengelege handeln. Die aus Fasern aufgebauten Flächengebilde wie Gewebe, Maschenwaren, Vliesstoffe oder Fadengelege werden unter der Sammelbezeichnung textile Flächengebilde zusammengefaßt. Gewebe werden als Trägermaterialien der Keramikbeschichtung für die Herstellung der erfindungsgemäßen Schutzkleidung bevorzugt.

Soweit textile Flächengebilde zum Einsatz kommen und mit einer mittels Plasmasprühbeschichtung aufgebrachten Keramikschicht versehen werden, können für deren Herstellung verschiedene Fasermaterialien Verwendung finden. Bevorzugt werden Faserarten, die bezüglich eines Stichschutzes und antiballistischen Schutzes auch ohne zusätzliche Behandlung bereits gute Voraussetzungen bieten. Solche sind zum Beispiel Aramidfasern oder Glasfasern. Aber auch aliphatische Polyamidfasern, Polyesterfasern oder Kohlenstoff-Fasern können als Trägermaterialien für die Keramikschicht in Form von textilen Flächengebilden Verwendung finden. Unter den genannten Materialien werden Aramide bevorzugt. Besonders bevorzugt liegen diese in Form von Geweben aus Aramidfasern vor.

Aramide, besonders Fasern aus Aramiden, sind in der Industrie gut bekannt. Sie finden vor allem im Bereich der Technischen Textilien vielfältige Verwendung. Für Aramide ist auch die Bezeichnung aromatische Polyamide üblich. Ein Handelsname einer Aramidfaser ist beispielsweise Twaron.

Unter Aramiden sind Polymere, die durch Polycondensation einer aromatischen Säure oder deren Chloride mit einem aromatischen Diamin entstehen, zu verstehen. Ein bekanntes Beispiel ist das aus Terephthalsäure und 1,4-Phenylendiamin gebildete Poly-p-phenylenterephthalamid. Unter Aramiden sollen im Sinne der Erfindung aber hier auch Polymere verstanden werden, die nicht vollständig aus aromatischen Verbindungen aufgebaut sind und die Anteile aliphatischer, alicyclischer oder heterozyklischer Verbindungen enthalten.

Unter antiballistischen Materialien sind im Sinne der Erfindung solche Materialien zu verstehen, die dem Eindringen von Geschossen oder Splittern Widerstand entgegen setzen und von denen die Geschwindigkeit von Geschossen und Splittern bei deren Auftreffen auf diese Materialien deutlich abgebremst wird.

Für die mittels Plasmasprühbeschichtung aufzubringende keramische Schicht eignen sich verschiedene Oxide wie Aluminiumoxid, Zirkoniumoxid, Calciumoxid, Magnesiumoxid, Titandioxid oder Siliciumdioxid. Weiter sind Aluminiumsilicat, Calciumsilicat, Magnesiumsilicat, Siliciumcarbid oder Zirkoniumcarbid geeignet. Die hier aufgeführten Substanzen sind nicht einschränkend, sondern lediglich als Nennung von Beispielen zu verstehen.

Die genannten Substanzen können alleine oder in Mischungen zum Einsatz kommen. Versuche haben gezeigt, daß mit Mischungen oft eine bessere Schutzwirkung erzielbar ist als mit Einzelsubstanzen. So wird beispielsweise die Herstellung der Keramikschicht aus einer Mischung von Aluminiumoxid und Titandioxid bevorzugt. Eine solche Mischung ist auf der Plasmasprühanlage leicht zu verarbeiten und bietet bezüglich der Herstellungskosten günstige Voraussetzungen.

Das Aufbringen der keramischen Schicht auf ein Flächengebilde erfolgt mittels eines Plasmasprühverfahrens. Das Verfahren und die Anlagen hierzu sind in der Industrie allgemein bekannt.Für die Plasmasprühbeschichtung sind auch Bezeichnungen wie Plasmaspritzen oder Plasmaspritzverfahren üblich. Im englischen Sprachgebrauch wird meist von "plasma spraying" gesprochen.

Die Plasmasprühbeschichtung zählt zu den thermischen Spritzverfahren. Unter diesem Dachbegriff sind Lichtbogenspritzen, Flammspritzen, atmosphärisches Plasmaspritzen (Plasmasprühbeschichtung) und Vacuum-Plasmaspritzen zu verstehen. Zur Herstellung der erfindungsgemäßen Schutzkleidung sind außer dem atmosphärischen Plasmaspritzen auch die anderen Methoden der thermischen Spritzverfahren einsetzbar, was in besonderem Maße für das Vacuum-Plasmaspritzen gilt. Das atmosphärische Plasmaspritzen, nachfolgend als Plasmasprühbeschichtung bezeichnet, wird hierfür jedoch bevorzugt.

Das Aufbringen der Keramikschicht in der Plasmasprühanlage wird meistens mit Hilfe eines Trägergases vorgenommen. Zur Verbesserung der Haftung zwischen Substrat und Keramikschicht findet häufig eine als Binder wirkende Substanz Verwendung.

Die einzustellende Schichtdicke richtet sich nach dem geforderten Schutzeffekt und nach der gewünschten Flexibilität. Sie sollte unter 100 µm liegen. Schichtdicken unter 60 µm werden bevorzugt, Schichtdicken von 20-40 µm werden besonders bevorzugt.

Die Keramikschicht kann auf die Flächengebilde einseitig oder beidseitig aufgebracht werden. Die Verwendung von Flächengebilden, die nur auf einer Seite eine mittels Plasmasprühbeschichtung aufgebrachte Schutzschicht enthalten, wird in der erfindungsgemäßen Schutzkleidung bevorzugt. Diese ist einmal kostengünstiger herstellbar als die beidseitig beschichtete Ware, zum anderen wird durch die Beschichtung beider Seiten des Trägermaterials keine nennenswerte Verbesserung der Stichschutzwirkung beobachtet. Überraschend wurde gefunden, daß die Flexibilität der Flächengebilde durch die Plasmasprühbeschichtung nicht verringert wird. Die hohe Flexibilität spielt bei der am Körper getragenen Schutzkleidung eine bedeutende Rolle.

Die erfindungsgemäße Schutzkleidung liegt in Form von Schutzwesten, Schutzanzügen, Schutzhandschuhen etc. vor.

Die erfindungsgemäße Schutzkleidung kann in ihrem Schutzpaket vollständig aus Lagen, die eine mittels Plasmasprühbeschichtung aufgebrachte Keramikschicht aufweisen, bestehen. Bevorzugt wird aber eine kombinierte Anwendung von beschichteten und nicht beschichteten Schutzlagen.

Unter Schutzpaket sind aufeinander gelegte Lagen von antiballistischen oder Stichschutz bewirkenden Flächengebilden, beispielsweise Gewebe aus Aramidfasern, zu verstehen.

Die erfindungsgemäße Schutzkleidung eignet sich in besonderer Weise für den kombinierten Stich- und antiballistischen Schutz gegen Kugeln und Splitter. Solche Schutzkleidung bietet besonders Polizeikräften, die im Dienst nicht nur der Bedrohung durch Schußwaffen und Explosivkörper, sondern auch Angriffen durch Stichwaffen ausgesetzt sind, einen deutlich erhöhten Schutz. Hier finden dann mittels Plasmasprühbeschichtung mit einer Keramikschicht versehene Schutzlagen in Kombination mit herkömmlichen antiballistischen Gewebelagen, die keine solche Beschichtung enthalten, Verwendung.

Die mittels Plasmasprühbeschichtung aufgebrachte Keramikschicht bietet zwar keinen zusätzlichen Schutz gegen Kugeln und Splitter. Das Abbremsen von Geschossen oder Splittern wird durch die Keramikschicht nicht gefördert, der beim Auftreffen eines Geschosses auf die Schutzkleidung eintretende Traumaeffekt wird aber durch die Keramikbeschichtung deutlich reduziert. Zweckmäßig ist es, bei Schutzkleidung, die diesen kombinierten Schutz durch Mitverwendung von Schutzlagen, die eine mittels Plasmasprühbeschichtung aufgebrachte Keramikschicht enthalten, bieten soll, die Gesamtzahl der Schutzlagen zu erhöhen. Ohne Beeinträchtigung des Tragekomforts wird hierdurch ein wirksamer Schutz gegen beide Bedrohungsarten erzielt.

So kann beispielsweise eine solche Weste für den kombinierten antiballistischen Schutz und Stichschutz so aufgebaut sein, daß von insgesamt 35 Schutzlagen die dem Körper zugewandten inneren 25 Lagen eine auf ein Gewebe aus Aramidfasern mittels Plasmasprühbeschichtung aufgebrachte Keramikschicht enthalten und dem Körper abgewandt zehn Lagen eines Gewebes aus Aramidfasern angeordnet werden, die keine solche Beschichtung enthalten.

Schutzkleidung, die nur dem Stichschutz dienen soll, kann ebenfalls aus einer Kombination von Schutzlagen mit und ohne Keramikschicht bestehen. Bei dieser Art von Schutzkleidung ist es zu empfehlen, die mit einer Keramikschicht versehenen Schutzschichten in den Außenlagen, also in den dem Körper abgewandten Lagen, anzuordnen. Aber auch die umgekehrte Anordnung, also die körpernahe Anordnung der mit einer Keramikschicht versehenen Schutzlagen, bietet gleichermaßen einen guten Schutz gegen die Bedrohung mit Stichwaffen.

Die Zahl der mittels Plasmasprühbeschichtung mit einer Keramikschicht versehenen Schutzlagen in der Schutzkleidung richtet sich nach der geforderten Schutzwirkung gegen Stichverletzungen. Bevorzugt wird der Einsatz von mehr als zehn Lagen mit einer Keramikschicht. Besonders bevorzugt wird die Verwendung von 20-30 der mit einer Keramikschicht versehenen Schutzlagen in der Schutzkleidung.

Ein Schutzpaket für den kombinierten antiballistischen und Stichschutz, das aus übereinander gelegten Schutzlagen mit und ohne Keramikbeschichtung aufgebaut ist, wird zur Herstellung einer Kugelschutzweste beispielsweise in eine Hülle aus einer PVC-Folie eingebracht und in diese eingeschweißt. Die einzelnen Lagen des Paketes werden eventuell miteinander vernäht, das Paket kann aber auch ohne Verfestigung in eine PVC-Hülle eingebracht werden. Eine Beweglichkeit der einzelnen Lagen hat sich im Hinblick auf einen besseren Stichschutz als zweckmäßig erwiesen. Ein Verkleben der einzelnen Lagen sollte somit, wenn überhaupt, nur punktförmig erfolgen.

Zur Herstellung einer Kugelschutzweste wird das in eine PVC-Folie eingeschweißte Paket in eine vorkonfektionierte Weste, die aus einem gefärbten oder bedruckten Gewebe aus Baumwolle-Polyesterfasern bestehen kann, eingebracht.

Dieses Gewebe bildet dann den Oberstoff der Schutzweste. Im Interesse einer leichten Entnahmemöglichkeit des antiballistischen Paketes, zum Beispiel bei einer notwendigen Reinigung, wird das Paket nicht in den Oberstoff voll eingenäht, sondern es wird eine Öffnungs- und Entnahmemöglichkeit mittels eines Reiß- oder Klettverschlusses geschaffen.

In einer ähnlichen Weise kann eine Weste, die nur dem Stichschutz dienen soll, hergestellt werden.

Neben dem Schutz gegen Stichverletzungen verringert die erfindungsgemäße Schutzkleidung auch die Gefahr von Schnittverletzungen, die mit ähnlichen Geräten entstehen wie die Stichverletzungen.

Mit der erfindungsgemäßen Schutzkleidung wird, wie in dem nachfolgenden Ausführungsbeispiel Nr. 1 gezeigt wird, bei der Herstellung von Kleidung für den Stichschutz bei deutlich verringertem Gewicht des Schutzpaketes und damit verbessertem Tragekomfort, eine gute Schutzwirkung erreicht. Darüberhinaus ist durch die Verwendung von Schutzschichten, die eine mittels Plasmasprühbeschichtung aufgebrachte Keramikschicht enthalten, in antiballistischer Schutzkleidung auch ein sehr wirksamer Stichschutz erzielbar.

Somit wurde mit der erfindungsgemäßen Schutzkleidung ein deutlicher Fortschritt bei der Herstellung von Kleidung, die den Sicherheitskräften einen guten Schutz bei ihren Einsätzen bieten soll, erreicht.

### Ausführungsbeispiele

### Ausführungsbeispiel Nr. 1

Dieses Beispiel zeigt die Vorteile der erfindungsgemäßen Stichschutzkleidung.

Aus Aramidfasern wurde ein Gewebe hergestellt. Die Fasern lagen in Form eines Filamentgarnes mit dem Titer 930 dtex vor. Das in Leinwandbindung hergestellte Gewebe hatte ein Flächengewicht von 198 g/m².

Auf dieses Gewebe wurde mittels Plasmasprühbeschichtung ein Keramikfilm von 40 µm Dicke aufgebracht. Die Keramikmasse bestand zu 70 % aus Aluminiumoxid und zu 30 % aus Titandioxid. Nach der Sprühbeschichtung hatte das Gewebe ein Flächengewicht von 292 g/m².

Die Stichschutzeigenschaften wurden nach der "Schweizer Norm", die auch der von den deutschen Polizeidienststellen aufgestellten Norm entspricht, geprüft. Es handelt sich hierbei um die mit der Ausgabe November 1993 von der Schweizerischen Polizeitechnischen Kommission herausgegebenen "Technischen Richtlinien für leichte Schutzwesten". Nach diesen wird ein Stichtest mit einem Stilett durchgeführt. Als Hintergrund wird hinter dem Schutzmaterial Plastilin verwendet. Als ausreichend stichfest gilt laut dieser Prüfungsrichtlinie ein Material, wenn die Testklinge nicht mehr als 20 mm in das Plastilin eingedrungen ist.

Das nach diesem Ausführungsbeispiel hergestellte keramikbeschichtete Gewebe aus Aramidfasern erfüllte die gestellte Forderung in einem Schichtaufbau von 16 Lagen, was einem Gesamtgewicht von ca. 4,8 kg/m² entspricht.

Vergleichend hierzu wurde ein Test mit Gestricken aus Aramidfasern, die bislang häufig für Stichschutzkleidung Einsatz fanden, durchgeführt. Hier wurde gemäß "Schweizer Norm" ein ausreichender Stichschutz erst mit einem Flächengewicht von 18 kg/m² erreicht.

Dieser Vergleich zeigt den mit dem erfindungsgemäßen Material erzielbaren Fortschritt, besonders im Tragekomfort, da sich hieraus ergibt, daß aus dem erfindungsgemäßen Material wesentlich leichtere Schutzkleidung hergestellt werden kann als aus dem bisher eingesetzten.

### Ausführungsbeispiel Nr. 2

Dieses Beispiel zeigt die Vorteile der erfindungsgemäßen Schutzkleidung für den kombinierten antiballistischen und Stichschutz.

Aus Aramidfasern wurde ein Gewebe hergestellt. Die Fasern lagen in Form eines Filamentgarnes mit dem Titer 930 dtex vor. Das in Leinwandbindung hergestellte Gewebe hatte ein Flächengewicht von 202 g/m².

Dieses Gewebe wurde nach der Herstellung geteilt. Ca. 60 % wurden unbeschichtet zurückgehalten, die restlichen ca. 40 % wurden einer Plasmasprühbeschichtung unterzogen.

Hierbei wurde ein Keramikfilm von 30 µm Dicke aufgebracht. Die Keramikmasse bestand zu 60 % aus Aluminiumoxid und zu 40 % aus Titandioxid. Nach der Sprühbeschichtung hatte das Gewebe ein Flächengewicht von 284 g/m².

Das so hergestellte beschichtete Gewebe wurde zu einer Schutzweste für den kombinierten Stich- und antiballistischen Schutz weiterverarbeitet. Hierbei erfolgte nach dem Zuschnitt die Bildung eines Schutzpaketes in der Weise, daß 35 Schutzlagen so übereinander gelegt wurden, daß körpernah 25 Lagen des mit einer Keramikbeschichtung versehenen Gewebes und körperfern 10 Lagen eines unbeschichteten Gewebes angeordnet wurden. Das so hergestellte Schutzpaket wurde in eine Hülle aus einer PVC-Folie eingeschweißt und einem Beschußversuch unterzogen.

Dieser wurde mit 9 mm Para-Munition aus 10 m Entfernung in einem Beschußwinkel von 90° durchgeführt. Die Prüfung des antiballistischen Effektes erfolgte einmal durch Feststellung eines eventuellen Durchschusses, zum anderen durch Prüfung der Veränderung einer hinter dem zu beschießenden Material angebrachten Plastilinmasse. Hierbei wurde die Eindrucktiefe des Geschosses in der Plastilinmasse ermittelt, womit ein ungefähres Maß für die Energiewirkung eines Geschosses auf den menschlichen Körper im Falle eines Beschusses festgestellt werden sollte. Als Eindringtiefe in die Plastilinmasse werden von den Polizei-Dienststellen, je nach Spezifikation, bis zu 44 mm zugelassen. Die Prüfung der Eindrucktiefe in Plastilin dient der Beurteilung des zu erwartenden Traumaeffektes beim Auftreffen eines Geschosses auf die Schutzkleidung.

Bei dem Beschuß der Weste, die in der oben beschriebenen Weise hergestellt wurde, konnte bei einer Beschußgeschwindigkeit von 460 m/sec erstmals ein Durchschuß festgestellt werden. Nach den Forderungen der Polizei-Dienststellen muß eine Schutzweste einer Beschußgeschwindigkeit bis 420 m/sec Stand halten. Bis zu dieser Beschußgeschwindigkeit darf kein Durchschuß auftreten.

Die Eindrucktiefe in Plastilin lag mit 17-18 mm weit unter den von den Polizei-Dienststellen zugelassenen Werten.

Bei der nach der "Schweizer Norm" durchgeführten Prüfung des Stichschutzverhaltens lag die Eindringtiefe in Plastilin bei 12 mm und damit deutlich unter den zulässigen Höchstwerten.

Im Vergleich dazu erfolgte der Beschuß einer Weste, die in herkömmlicher Weise aus 28 Lagen des nicht mit einer Keramikbeschichtung versehenen und in der oben beschriebenen Weise hergestellten Gewebes aufgebaut wurde. Hier wurde erstmals ein Durchschuß bei einer Geschwindigkeit von 500 m/sec festgestellt. Die Eindringtiefe in Plastilin lag bei 35-38 mm.

Beim Stichschutz-Test nach der "Schweizer Norm" wurde eine Eindringtiefe in Plastilin von deutlich über 100 mm festgestellt. Das Testmaterial genügte somit den Stichschutzforderungen nicht.

Weitere Versuche haben gezeigt, daß erst mit einer Schutzkleidung, bestehend aus über 70 Lagen eines nicht mit einer Keramikschicht beschichteten Aramidgewebes, die geforderten Werte der "Schweizer Norm" erreicht werden können.

Der bei diesem Versuch durchgeführte Vergleich zeigt, daß bei einer Schutzkleidung, die sowohl antiballistischen als auch Stichschutz bieten soll, bei Einsatz eines mittels Plasmasprühbeschichtung mit einer Keramikschicht versehenen Materials in den Schutzlagen eine höhere Zahl von Lagen benötigt wird, um die geforderte Durchschußfestigkeit mit Sicherheit zu gewährleisten, er zeigt aber auch, daß auf diesem Wege die Herstellung von Schutzkleidung, die ausreichenden Schutz gegen beide Bedrohungsarten bietet, gewährleistet werden kann. Daneben wird aber noch die sehr wichtige, deutliche Verringerung des Traumaeffektes beim Auftreffen eines Geschosses erreicht.

## Patentansprüche

1. Schutzkleidung, besonders Kleidung zum Schutz gegen Verletzungen durch Stichgeräte, Schneidgeräte, Geschosse oder Splitter, aufgebaut aus mehreren überein gelegten Lagen von Flächengebilden, die gegebenenfalls miteinander vernäht oder punktförmig miteinander verklebt sind, dadurch gekennzeichnet, daß mindestens eine der Lagen auf mindestens einer Seite eine mittels Plasmasprühbeschichtung aufgebrachte Keramikschicht enthält.

2. Schutzkleidung nach Anspruch 1, dadurch gekennzeichnet, daß mindestens eine der Lagen aus einem Flächengebilde aus Aramiden besteht.

3. Schutzkleidung nach mindestens einem der Ansprüche 1 - 2, dadurch gekennzeichnet, daß mindestens eine der Lagen aus Aramiden besteht und eine mittels Plasmasprühbeschichtung aufgebrachte Keramikschicht enthält.

4. Schutzkleidung nach mindestens einem der Ansprüche 1 - 3, dadurch gekennzeichnet, daß mindestens eine der Lagen aus einem Gewebe aus Aramidfasern besteht.

5. Schutzkleidung nach mindestens einem der Ansprüche 1 - 4, dadurch gekennzeichnet, daß mindestens eine der Lagen aus einem Gewebe aus Aramidfasern besteht und eine mittels Plasmasprühbeschichtung aufgebrachte Keramikschicht enthält.

6. Schutzkleidung nach mindestens einem der Ansprüche 1 - 5, dadurch gekennzeichnet, daß die Keramikschicht aus einer Kombination von mindestens zwei verschiedenen keramischen Substanzen besteht.

7. Schutzkleidung nach mindestens einem der Ansprüche 1 - 6, dadurch gekennzeichnet, daß die Keramikschicht eine Dicke unter 100 µm aufweist.

8. Schutzkleidung nach mindestens einem der Ansprüche 1 - 6, dadurch gekennzeichnet, daß die Keramikschicht eine Dicke von 20 - 40 µm aufweist.

9. Schutzkleidung nach mindestens einem der Ansprüche 1 - 8, dadurch gekennzeichnet, daß nur eine Seite der Lagen eine mittels Plasmasprühbeschichtung aufgebrachte Keramikschicht enthält.

10. Schutzkleidung nach mindestens einem der Ansprüche 1 - 9, dadurch gekennzeichnet, daß mindestens 10 Lagen eine mittels Plasmasprühbeschichtung aufgebrachte Keramikschicht enthalten.

11. Schutzkleidung nach mindestens einem der Ansprüche 1 - 9, dadurch gekennzeichnet, daß 20 - 30 Lagen eine mittels Plasmasprühbeschichtung aufgebrachte Keramikschicht enthalten.

12. Schutzkleidung nach mindestens einem der Ansprüche 1 - 11, dadurch gekennzeichnet, daß sie aus mit einer Keramikschicht versehenen Lagen sowie aus Lagen ohne Keramikschicht besteht.

13. Verwendung der Schutzkleidung nach mindestens einem der Ansprüche 1 - 12 für Stichschutzkleidung.

14. Verwendung von Schutzkleidung nach mindestens einem der Ansprüche 1 - 12 für Kleidung, die sowohl Schutz gegen Stichverletzungen als auch Schutz gegen Geschosse und Splitter bietet.

## Claims

1. Protective clothing, in particular clothing for protection against injuries from stabbing implements and cutting implements, bullets or splinters, constructed from several layers of flat structures lain one on top of the other, which are optionally sewn together or glued together in punctiform manner, characterised in that at least one of the layers has on at least one side a ceramic layer applied by means of plasma spray coating.

2. Protective clothing according to claim 1, characterised in that at least one of the layers consists of a flat structure made of aramides.

3. Protective clothing according to at least one of claims 1 and 2, characterised in that at least one of the layers consists of aramides and has a ceramic layer applied by means of plasma spray coating.

4. Protective clothing according to at least one of claims 1 to 3, characterised in that at least one of the layers consists of a woven fabric made of aramide fibres.

5. Protective clothing according to at least one of claims 1 to 4, characterised in that at least one of the layers consists of a woven fabric made of aramide fibres and has a ceramic layer applied by means of plasma spray coating.

6. Protective clothing according to at least one of claims 1 to 5, characterised in that the ceramic layer consists of a combination of at least two different ceramic substances.

7. Protective clothing according to at least one of claims 1 to 6, characterised in that the ceramic layer has a thickness of less than 100 µm.

8. Protective clothing according to at least one of claims 1 to 6, characterised in that the ceramic layer has a thickness of from 20 to 40 µm.

9. Protective clothing according to at least one of claims 1 to 8, characterised in that only one side of the layers has a ceramic layer applied by means of plasma spray coating.

10. Protective clothing according to at least one of claims 1 to 9, characterised in that at least 10 layers have a ceramic layer applied by means of plasma spray coating.

11. Protective clothing according to at least one of claims 1 to 9, characterised in that 20 to 30 layers have a ceramic layer applied by means of plasma spray coating.

12. Protective clothing according to at least one of claims 1 to 11, characterised in that it consists of layers provided with a ceramic layer as well as of layers without a ceramic layer.

13. The use of the protective clothing according to at least one of claims 1 to 12 as protective clothing against stabbing.

14. The use of the protective clothing according to at least one of claims 1 to 12 as clothing which affords both protection against injuries by stabbing and protection against bullets and splinters.

## Revendications

1. Vêtement de protection, en particulier vêtement pour la protection contre les blessures provoquées par des instruments pointus, des instruments tranchants, des projectiles ou des éclats, constitué de plusieurs couches superposées de produits plats qui sont éventuellement cousus ensemble ou collés ensemble par points, caractérisé en ce qu'au moins l'une des couches comporte sur au moins une de ses faces un film de céramique appliqué au moyen d'un revêtement par pulvérisation au plasma.

2. Vêtement de protection selon la revendication 1, caractérisé en ce qu'au moins l'une des couches est constituée d'un produit plat en aramide.

3. Vêtement de protection selon l'une au moins des revendications 1 à 2, caractérisé en ce qu'au moins l'une des couches est constituée d'aramide, et comporte un film de céramique appliqué au moyen d'un revêtement par pulvérisation au plasma.

4. Vêtement de protection selon l'une au moins des revendications 1 à 3, caractérisé en ce qu'au moins l'une des couches est constituée d'un tissu en fibres aramides.

5. Vêtement de protection selon l'une au moins des revendications 1 à 4, caractérisé en ce qu'au moins l'une des couches est constituée d'un tissu en fibres aramides et comporte un film de céramique appliqué au moyen d'un revêtement par pulvérisation au plasma.

6. Vêtement de protection selon l'une au moins des revendications 1 à 5, caractérisé en ce que le film de céramique est constituée d'une combinaison d'au moins deux substances céramiques différentes.

7. Vêtement de protection selon l'une au moins des revendications 1 à 6, caractérisé en ce que le film de céramique présente une épaisseur inférieure à 100 µm.

8. Vêtement de protection selon l'une au moins des revendications 1 à 6, caractérisé en ce que le film de céramique présente une épaisseur de 20 à 40 µm.

9. Vêtement de protection selon l'une au moins des revendications 1 à 8, caractérisé en ce que seule une face des couches comporte un film de céramique appliqué au moyen d'un revêtement par pulvérisation au plasma.

10. Vêtement de protection selon l'une au moins des revendications 1 à 9, caractérisé en ce qu'au moins dix couches comportent un film de céramique appliqué au moyen d'un revêtement par pulvérisation au plasma.

11. Vêtement de protection selon l'une au moins des revendications 1 à 9, caractérisé en ce que 20 à 30 couches comportent un film de céramique appliqué au moyen d'un revêtement par pulvérisation au plasma.

12. Vêtement de protection selon l'une au moins des revendications 1 à 11, caractérisé en ce qu'il est constitué de couches dotées d'un film de céramique ainsi que de couches sans film de céramique.

13. Utilisation du vêtement de protection selon l'une au moins des revendications 1 à 12 pour un vêtement de protection contre des instruments pointus.

14. Utilisation d'un vêtement de protection selon l'une au moins des revendications 1 à 12 pour un vêtement qui offre aussi bien une protection contre les blessures par instruments pointus, qu'une protection contre les projectiles et les éclats.
